# EUROPEAN PATENT SPECIFICATION

(11) **EP 2 663 800 B1**
(45) Date of publication and mention of the grant of the patent: **26.03.2014**
(21) Application number: 12701598.0
(22) Date of filing: 13.01.2012
(51) Int. Cl.: F16M 11/06, F16M 11/04, F16M 13/02, A47G 23/02, A47K 1/09, A47K 5/12, A61G 13/10

(54) **BOTTLE MOUNTING SYSTEM INCLUDING SEPARABLE BOTTLE AND CLAMP**
FLASCHENHALTERUNGSSYSTEM MIT EINER TRENNBAREN FLASCHE UND EINER KLEMME
SYSTÈME DE SUPPORT DE FLACON COMPRENANT UN FLACON ET UN ÉLÉMENT DE FIXATION SÉPARABLES

(30) Priority: 14.01.2011 US 201113007018
(43) Date of publication of application: 20.11.2013
(73) Proprietor: Gojo Industries, Inc., Akron, OH 44309 (US)
(72) Inventor: ZLATIC, Doug, North Royalton Ohio 44133 (US); ROSENKRANZ, Mark, Medina Ohio 44256 (US); CASTEEL, Steve, Canal Fulton Ohio 44614 (US)
(74) Representative: Tetzner, Michael
(86) International application number: PCT/US2012/021235
(87) International publication number: WO 2012/097246

(56) References cited:
- EP-A1- 0 362 500
- WO-A1-98/20214
- DE-U1- 8 708 734
- FR-A1- 2 881 507
- JP-U- H03 119 604
- US-A- 2 309 121
- US-A- 5 322 253
- US-A- 5 996 957
- US-A1- 2009 050 766

## Description

### FIELD OF THE INVENTION

The present invention generally relates to bottle mounting systems. More particularly, the present invention relates to a bottle mounting system including a bottle holder that is separable from a clamp. The bottle holder will hold a bottle that retains product that is to be made available for end users. Though this invention is not limited to any particular product, the bottle mounting system will be particularly useful for the provision of hand hygiene products, and, though this invention is not to be limited to any particular environment, this invention will find utility in health care facilities and other facilities where hand hygiene is important.

### BACKGROUND OF THE INVENTION

It is well known that health care facilities such as hospitals, nursing homes and hospice care facilities can suffer from a lack of satisfactory hand hygiene practices. As the workers within these facilities move from room to room and patient to patient, it is important that they maintain good hand hygiene practices in order to avoid transferring germs, bacteria and viruses and the like throughout the facility. Products such as soaps and sanitizers, if properly and often used, can serve to promote a hygienic environment in which transmission of germs, bacteria and viruses and the like is kept to a minimum. Thus, these facilities can benefit from the implementation of good hand hygiene practices.

One way in which to promote good hand hygiene practices in such facilities is to make soaps and sanitizers readily available to the working staff and patients. Thus, many hospitals provide hand soap and/or hand sanitizer dispensers near or within the different rooms of these facilities. Most such dispensers are permanently mounted, typically wall-mounted, as for example in the wall-mounted dispensers of U.S. Patent No. 6,877,642. Thus, even when such dispensers are positioned near or within every room in the facility, their use might be avoided simply because the working staff does not take the time to access them at their permanently-mounted location. The art might benefit from bottle mounting systems in which bottles containing soaps or hand sanitizers can be selectively mounted to various surfaces within the facility, thus allowing the working staff to place these hand hygiene products at a more readily accessible locations, even transferring a given bottle of hand hygiene product to different locations at the desire of the worker.

In light of this need, the present invention provides a bottle mounting system that includes a clamp and a bottle holder that selectively mounts to that clamp. Thus, the bottle holder can be mounted anywhere a clamp can be mounted, and the staff is not limited to using permanently-mounted product dispensers. Though mention has been made of health care facilities and the like, it should be appreciated that this bottle mounting system is not limited to use in any particular environment, and the bottle mounting system of this invention might be employed anywhere found to be beneficial by the end users. Additionally, though mention has been made of bottles holding hand hygiene products, it should be appreciated that this bottle mounting system might be employed to mount bottles holding any desired product for any desired activity. For example, the bottle might hold lotions or surface treatment products, such as surface disinfectant and the like.

US 2009/050766 A1 discloses a bottle mounting system having the features of the preamble of claim 1. US 5 322 253 A, US 5 996 957 A, JP H03 119604 U, DE 87 08 734 U1, EP 0 362 500 A1, US 2 309 121 A, WO 98/20214 A1 and FR 2 881 507 A1 describe further mounting systems.

### SUMMARY OF THE INVENTION

This invention provides a bottle mounting system including a bottle holder and a clamp. The bottle holder includes a bottom wall having a top surface and a bottom surface, and a sidewall having a front surface and a rear surface. A bottom mount is provided at the bottom surface of the bottom wall, and a rear mount is provided at the rear surface of the sidewall. The clamp includes a first jaw providing a first clamp surface and a clamp mount. The bottom mount and the clamp mount selectively mate to mount the bottle holder to the first jaw in a bottom-mounted orientation, and the rear mount and the clamp mount selectively mate to mount the bottle holder to the first jaw in a rear-mounted orientation. The clamp further includes a second jaw providing a second clamp surface. The second jaw mates with the first jaw and the first jaw slides relative to the second jaw. The first clamp surface moves with the first jaw and the second clamp surfaces moves with the second jaw such that the first and second jaws interact to mount the clamp to a support member by squeezing the support member between the first and second clamp surfaces. The clamp further may include a releasable locking member that has a locking position wherein it locks the first jaw and second jaw in relative position to each other so as to prevent the first jaw and second jaw from moving apart from each other. The releasable locking member also has a non-locking position wherein it permits the first jaw and second jaw to move apart from each other.

In particular embodiments, when the first and second jaws are mounted to the support member such that the clamp mount is presented in a vertical surface of the first jaw, the rear mount selectively mates with the clamp mount to present the bottle holder in the rear-mounted orientation, with the top surface of the bottom wall extending generally horizontally such that a bottle is selectively received on the top surface in its proper orientation for use. Additionally, when the first and second jaws are mounted to the support member such that the clamp mount is presented in a horizontal surface of the first jaw, the bottom mount selectively mates with the clamp mount to present the bottle holder in the bottom-mounted orientation, with the top surface of the bottom wall extending generally horizontally such that a bottle is selectively received on the top surface in its proper orientation for use.

In other embodiments, the bottom mount and the clamp mount selectively mate to mount the bottle holder to the first jaw in a bottom-mounted orientation, and the bottom mount and clamp mount are configured so that the bottle holder can be mounted to the clamp mount in different orientations rotated about a vertical axis of the bottle holder. Similarly, the rear mount and the clamp mount selectively mate to mount the bottle holder to the first jaw in a rear-mounted orientation, and the rear mount and clamp mount are configured so that the bottle holder can be mounted to the clamp mount in different orientations rotated about a horizontal axis of the bottle holder.

### BRIEF DESCRIPTION OF THE DRAWINGS

Fig. 1 is a side elevation view of a bottle mounting system in accordance with this invention, shown with the bottle holder component disengaged from the clamp component;
Fig. 2 is a top perspective view of the bottle holder;
Fig. 3 is a bottom perspective view of the bottle holder;
Fig. 4 is an assembly view showing an optional bottle mounting system in accordance with this invention wherein the bottle holder is formed of multiple pieces, the assembly view also showing an optional adapter member for receiving a different bottle in the bottle holder;
Fig. 5 a side elevation view of the clamp component, showing a first jaw separated from a second jaw;
Fig. 6 is a side elevation view of the clamp component, shown with the first and second jaws engaged;
Fig. 7 is a cross-sectional view of the clamp component of Fig. 6, showing pawl and ratchet members, a micro-adjustment member and a release switch member;
Fig. 8 is a side elevation view of the bottle mounting system showing the clamp mounted to a vertically extending support member such that the clamp mount of the clamp extends horizontally;
Fig. 9 is a side elevation view of the bottle mounting system showing the clamp mounted to a horizontally extending support member such that the clamp mount extends horizontally;
Fig. 10 is a side elevation view of the clamp mounting system showing the clamp mounted to a horizontally extending support member such that the clamp mount extends vertically; and
Fig. 11 is a side elevation view such as that shown in Fig. 10, but with the bottle holder rotated 90° relative to the axis of the pump mount.

### DETAILED DESCRIPTION OF ILLUSTRATIVE EMBODIMENTS

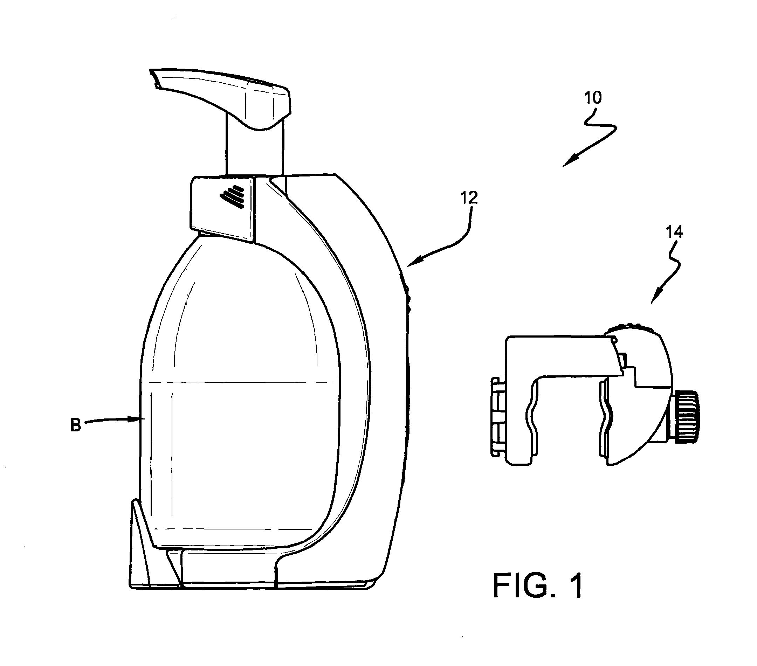

A bottle mounting system in accordance with the present invention is shown in Fig. 1 and designated by the numeral 10. The bottle mounting system 10 includes a bottle holder 12 and a clamp 14. The clamp 14 is selectively (i.e., at the desire of an individual) mounted to various support members, and the bottle holder 12 is selectively mounted to the clamp 14. In this way, the bottle holder can be mounted in a variety of locations for the purpose of holding a bottle B in a convenient location for an end user.

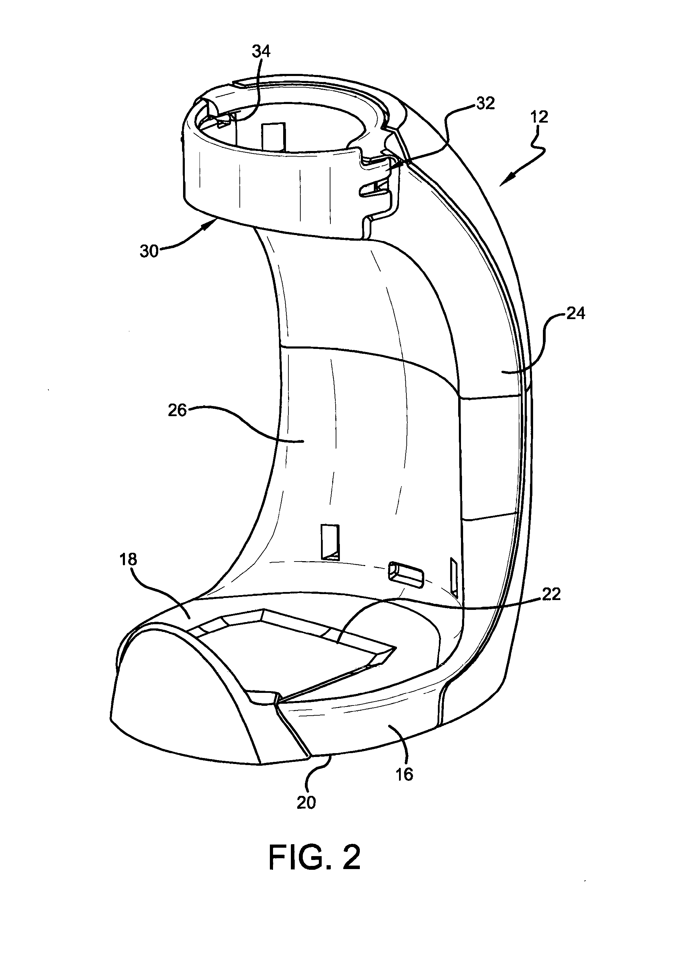

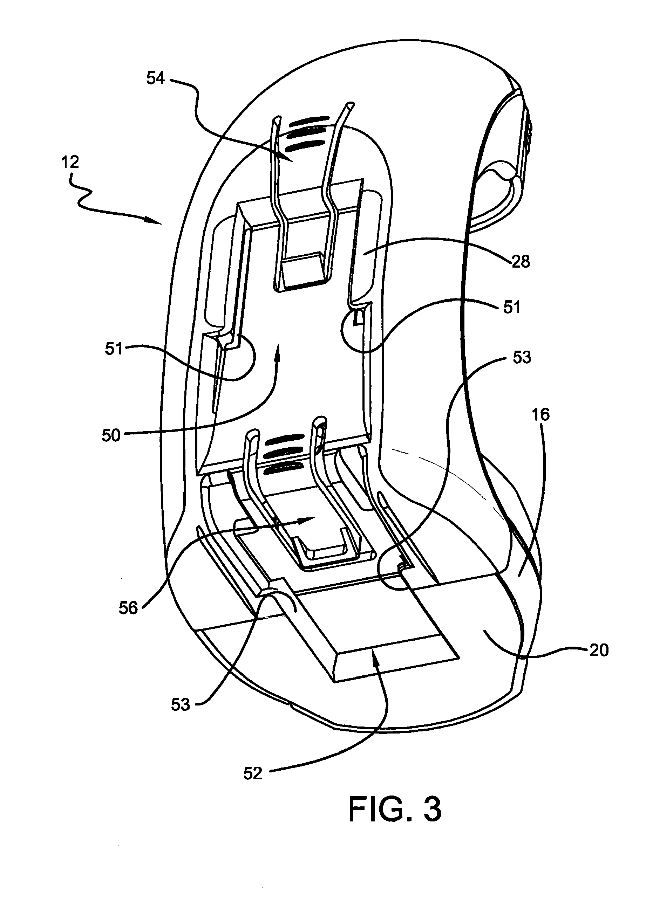

The bottle holder 12 is better appreciated with reference to Figs. 2-4. As seen therein, the bottle holder 12 includes a bottom wall 16 providing a top surface 18 and a bottom surface 20. In particular embodiments, the top surface 18 can be formed with a concavity 22 that is shaped to securely hold a bottle B (Fig. 1) of a first type having a cross-section shaped to intimately fit within the concavity 22. The bottle holder 12 also includes a sidewall 24 providing a front surface 26 and a rear surface 28. In some embodiments, a gate 30 is provided proximate the top of the side wall 24. The gate 30 is employed to better secure a bottle B to the bottle holder 12. The gate 30 is secured to the bottle holder 12 by a hinge 32, at one end thereof, and selectively latches to the bottle holder at a latch 34 provided at the end opposite the hinge 32. The latch 34 releasably engages a catch 35 also provided proximate the top of the side wall 24. This gate 30 wraps around the neck of the bottle B such that the bottle is secured in the bottle holder 12 at the bottom surface 20 of the bottom wall 16 and at the gate 30. When the bottle B is a pump bottle, as shown in Fig 1, the gate 30 helps to keep the bottle in place even though the force of pushing down on the plunger to dispense product can cause the bottle to tilt or fall off of the bottom surface 20.

In an embodiment of this invention, the gate 30 is designed such that the latch 34 and its interaction with the catch 35 is not readily noticeable. More particularly, because the latch 34 and catch 35 are not readily noticeable, individuals that are not familiar with the bottle mounting system and the use thereof will be unlikely to know how to release the bottle B from gate 30 that helps to secure it to the bottle holder 12. This will frustrate attempts to steal the bottle B from the holder and may therefore be a desirable feature. In other embodiments, the latch 34 and catch 35 interact such that the gate 30 must be first pushed inwardly, toward the catch 35, and then downwardly to disengage the latch 34 and catch 35. This might also be desired to again frustrate easy release of the bottle B from the bottle holder 12.

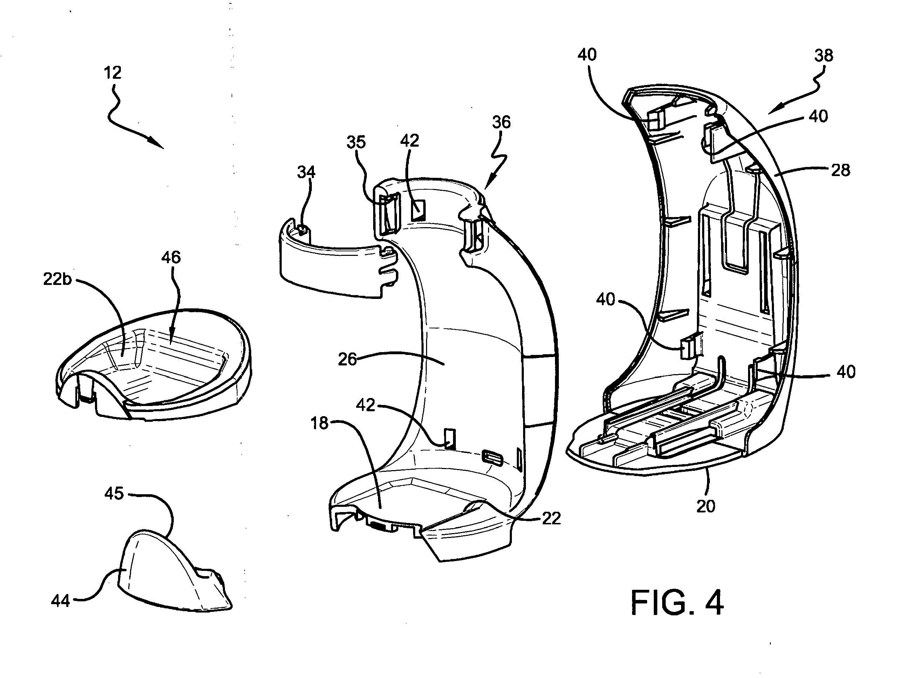

The bottle holder 12 may be formed of any suitable material, and, for ease of manufacture can be formed from multiple manufactured parts fitted together. This is shown in the embodiment of Fig. 4, wherein the bottle holder 12 includes a top half 36 and a bottom half 38 fitting together through the interaction of tabs 40 and slots 42. The bottom wall 16 may include an end cap 44 serving to complete the bottom wall 16 and provide a front lip 45 that can help better secure the bottle B within the bottle holder 12. This end cap 44 would also interact with elements of the top half 36 and/or bottom half 38 through similar tabs and slots. In embodiments providing a concavity 22, the end cap 44 may serve to complete the periphery of the concavity 22.

Realizing that it may be beneficial to receive different types of bottles in the bottle holder 12, in some embodiments, an adapter 46 is provided to securely fit over the top surface 18 of the bottom wall 16 to provide a differently-shaped concavity 22b such that the bottle holder 12 can receive a bottle of a second type, different from the bottle B intended for receipt in the concavity 22.

In order to selectively mate the bottle holder 12 with a clamp mount portion of the clamp 14, the rear surface 28 of the side wall 24 includes a rear mount 50, and the bottom surface 20 of the bottom wall 16 includes a bottom mount 52. In this particular embodiment, the rear mount 50 includes opposed tracks 51 and, similarly, the bottom mount 52 includes opposed tracks 53. Within the length of the tracks 51 is provided a releasable rear latch 54, and, at the entrance to the tracks 53 is provided a releasable bottom latch 56. In the particular embodiment shown, the releasable rear latch 54 and the releasable bottom latch 56 are formed as part of the bottom half 38 of the bottle holder 12, and the bottle holder 12 is formed of a resilient material, such as plastic, such that the releasable rear latch 54 and releasable bottom latch 56 pivot on living hinges. The functioning of the releasable latches 54 and 56 and their interaction with a clamp mount on the clamp 14 will be described more fully herein below, after first describing aspects of the clamp 14 in more detail.

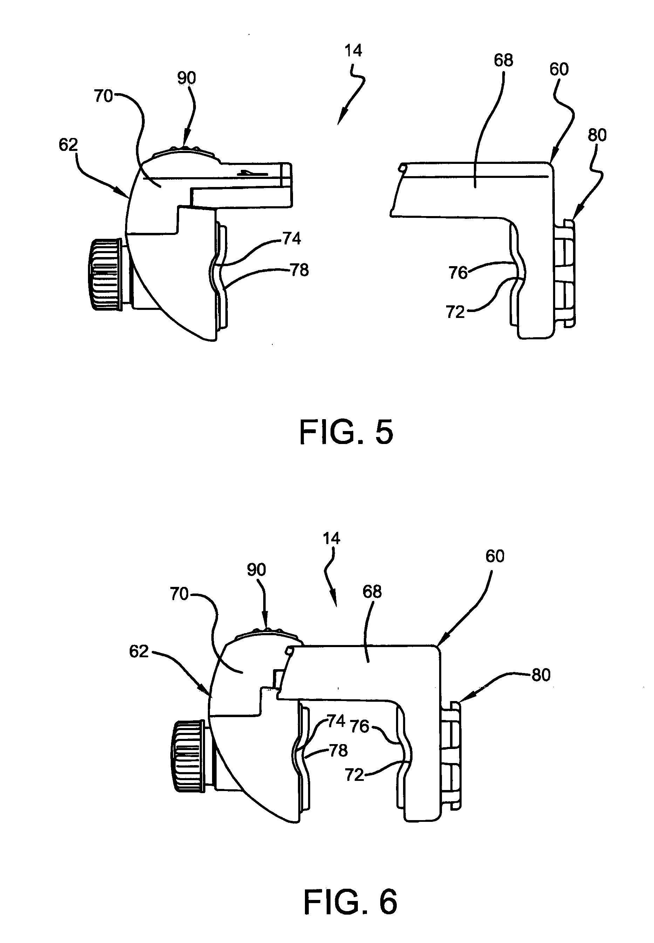

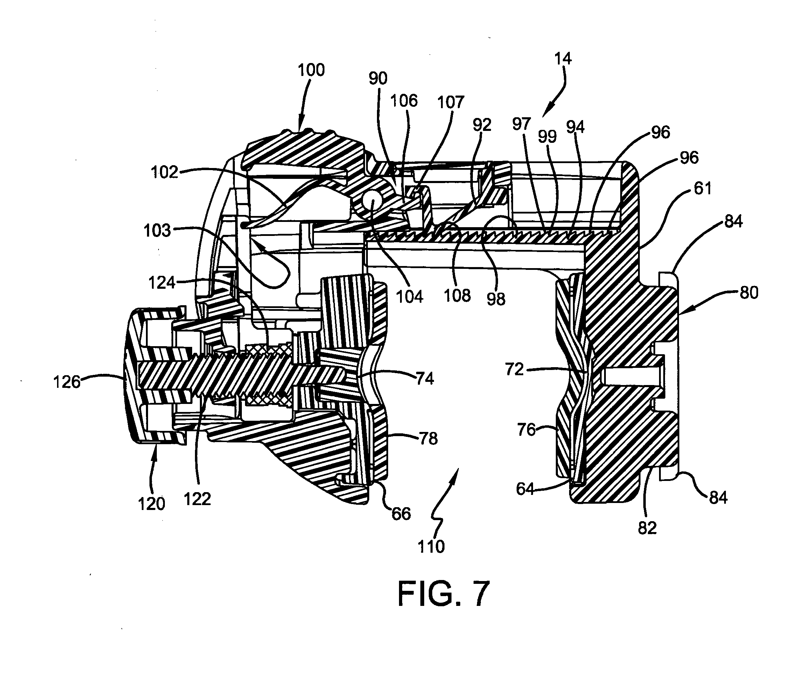

The clamp 14 is more particularly shown in Figs. 5-7, wherein the clamp 14 includes a first jaw 60 that selectively mates with a second jaw 62 such that a clamp surface 64 (Fig. 7) of the first jaw extends generally parallel to and spaced from a clamp surface 66 (Fig. 7) of the second jaw 62. The first and second jaws 60, 62 interact to mount the clamp 14 to a support member by squeezing the support member between the clamp surfaces 64 and 66. In this particular embodiment, the clamp surfaces 64 and 66 extend generally perpendicularly to there respective body members 68 and 70 of their respective jaw members 60, 62, but the present invention is not limited to or by any specific structure such as that shown in the drawings, because other structures may be found sufficient to provide a suitable clamp for employment in accordance with the present invention. In particular embodiments, the clamp surface 64 may include a detent 72, and, similarly, the clamp surface 66 may include a detent 74 substantially aligned with detent 72. These detents 72 and 74 serve to permit the clamp 14 to be secured to a pole by squeezing the pole between the clamp surface 64 and the clamp surface 66 at the detents 72 and 74. This may be found to be particularly useful for mounting the clamp to the pole of an IV stand (for delivering intravenous solutions to a patient). In particular embodiments, the clamp surfaces 64 and 66 may be covered with a cushion member such as those shown at 76 and 78 so as to cushion and also incease the gripping force exerted upon the surface on which the clamp 14 is secured.

As seen in Figs. 5-7, the body member 70 of the second jaw 62 slides within a track defined by the body member 68 of the first jaw 60, and, in this way, the first jaw 60 and the second jaw 62 selectively mate and slide relative to each other. The first and second jaws 60, 62 are locked in place in their relative positions in order to secure the clamp 14 to a support member. More particularly, a releasable locking member 90 is provided in the second jaw 62 and has a locking position wherein it locks the first jaw 60 and second jaw 62 in relative position to each other so as to prevent the first jaw 60 and the second jaw 62 from moving apart from each other. The releasable locking member 90 also has a non-locking position wherein it permits the first jaw 60 and the second jaw 62 to move apart from each other. Although various mechanisms can be employed for effecting this locking and unlocking of the relative positions of the first jaw 60 and the second jaw 62, the present embodiment employs a pawl and ratchet mechanism, as best seen in Fig. 7.

In this pawl and ratchet embodiment, a pawl 92 is provided by the second jaw 62 and ratchets over a ratchet 94 as the first jaw 60 and second jaw 62 slide relative to one another so as to bring the clamp surface 66 closer to the clamp surface 64. The pawl 92 is normally biased to engage the ratchet 94, but is resilient enough to ratchet over the multiple teeth 96 of the ratchet 94 as the clamp surfaces 64 and 66 are brought closer together. The linear rack 98 of the ratchet 94 provides the multiple teeth 96 having sloped surfaces 97 over which the pawl 92 ratchets during linear movement to bring the clamp surfaces 64 and 66 closer together, and further includes vertical (in the orientation of Fig. 7) stop surfaces 99 that prevent the pawl 92 from moving relative to the linear rack 98 when there is an attempt to further separate the clamp surfaces 64 and 66. In order to permit the clamp surfaces 64 and 66 to be further distance one from the other, the switch 100 that engages a distal end of the pawl 92 must be pressed. Pressing on the switch 100 moves the locking member 90 to its non-locking position. More particularly, the switch 100 is pivotally mounted to the second jaw 62 and biased to its locking position by a resilient arm 102 having one end secured to the body of the switch 100 and the other end engaging a stationary structure of the second jaw 62, as shown at the numeral 103. The resilient arm 102 joins with the remainder of the switch 100 on one side of a hinge 104 thorugh the body of the switch 100, while a pawl latch 106 engages a distal end 107 of the pawl 92. When the switch 100 is pressed, it pivots against the bias of the resilient arm 102 such that the pawl latch 106 is raised, thus raising a locking tip 108 of the pawl 92 out of engagement with the ratchet teeth 96. More particularly, pressing on the switch 100 raises the pawl above the stop surfaces 98 of the teeth 96, therefore permitting relative movement of the first jaw 60 and second jaw 62 so as to move their clamp surfaces 64, 66 away from one another.

Thus, it can be seen that the clamp 14 can be mounted to a support member by squeezing the support member between the clamp surfaces 64 and 66, and the clamp 14 can be removed from a mounted position on a support member by pressing the switch 100 to release the releasable locking member 90 and permit the first and second clamp surfaces 64 and 66 to move apart. It will be appreciated that the mouth 110 defined by the distance of separation of the clamp surfaces 64 and 66 will have a maximum width (in the orientation of Fig. 7) defined where the pawl 92 engages the most distal tooth 96 of the rack 98. The clamp 14 can mount to any support member that can fit within the mouth 110. When mounting to a ledge of a table or counter, the general flat surfaces of the clamp surfaces 64 and 66 will engage the opposed surfaces of the table, and, when mounted to a pole, the pole will be located at the detents 72 and 74.

A hand-tightening can be employed to initially secure the clamp 14 to a support member. Particularly, the mouth 110 of the clamp 14 can be placed over the support member, and an individual can squeeze the first and second jaws 60, 62 so as to bring the clamp surfaces 64, 66 into engagement with the support member. Because some individuals may not have the hand strength to adequately squeeze the clamp 14 to secure it to a support member in a stable manner, hand pressure may be found insufficient to suitably secure the clamp 14 to a support member. Thus, a micro-adjusting member 120 is provided to further tighten the clamp 14 onto the support member after initial macro-adjustment is performed by hand by squeezing the first and second jaws 60, 62 toward one another. In the embodiment shown, the micro-adjustment member 120 includes a threaded screw 122 to which the clamp surface 66 is secured. This threaded screw 122 extends through a threaded bore 124 in the second jaw 62 such that the threaded screw 122 can be selectively rotated to adjust the positioning of the clamp surface 66 relative to the clamp surface 64. A knob 126 is provided for the purpose of rotating the threaded screw 122, and rotating the screw 122 in one direction causes the clamp surface 66 to move toward the clamp surface 64, and rotating the threaded screw 122 in another direction causes the clamp surface 66 to move away from the clamp surface 64.

A clamp mount 80 extends from the first jaw 60, more particularly opposite the clamp surface 64. The clamp mount 80 interacts with either the rear mount 50 or the bottom mount 52 so that the bottle holder 12 can be mounted to the clamp 14. Thus, the bottom mount 52 and the clamp mount 80 selectively mate to mount the bottle holder 12 to the first jaw 60 in a bottom-mounted orientation, and the rear mount 50 and the clamp mount 80 selectively mate to mount the bottle holder 12 to the first jaw 60 in a rear-mounted orientation.

In this embodiment, the clamp mount 80 is a male mount that includes a post 82 and a flange 84 extending therefrom. The post 82 raises the flange 84 off of the mount side 61 of the first jaw 60 such that the flange 84 can be received into either one of the tracks 51, 53 of the rear mount 50 and bottom mount 52. More particularly, the clamp 14 can be mounted to a support surface, and the bottle holder 12 can be mounted thereto by sliding the bottle holder 12 onto the clamp mount 80 at one of the tracks 51, 53. Although the particular embodiment disclosed herein shows a male mount at clamp mount 80 and female mounts at tracks 51 and 53, it should be appreciated that the bottom mount may be selected from a male mount and a female mount, and the rear mount may be selected from a male mount and a female mount, with the proviso that the rear mount and the bottom mount are selected to be the same, and the clamp mount is selected from a male mount and a female mount, with the proviso that, if the bottom and rear mounts are selected to be male mounts, the clamp mount is selected to be a female mount, and, if the bottom mount and the rear mount are selected to be female mounts, the clamp mount is selected to be a male mount.

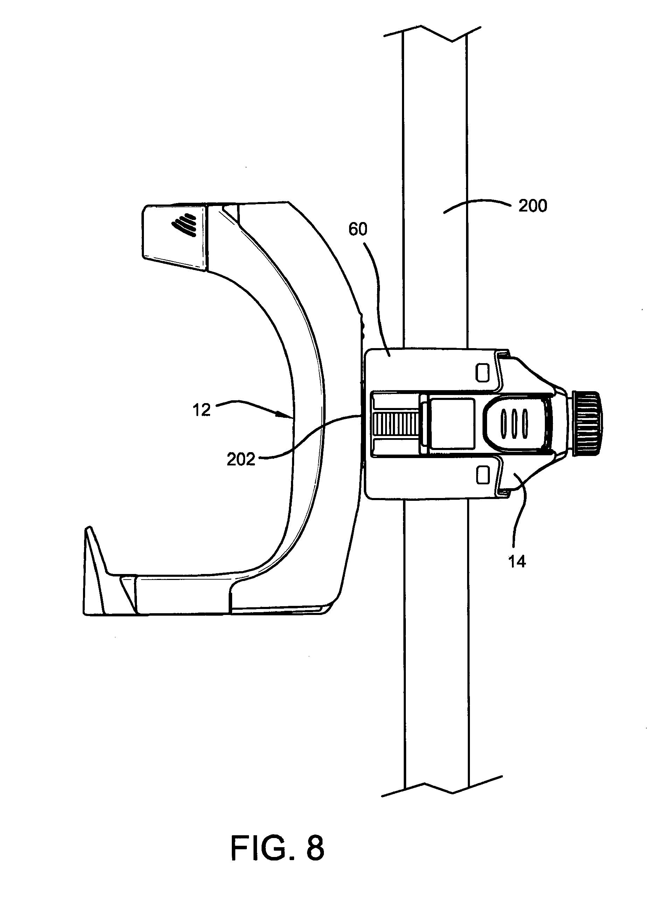

Referring now to Fig. 8, it can be seen that the clamp 14 can mount to a vertically-extending support member 200, such that the clamp mount 80 is presented in a vertical surface 202 of the first jaw 60, and the rear mount 50 selectively mates with the clamp mount 80 to present the bottle holder 12 in the rear-mounted orientation, with the top surface 18 of the 16 bottom wall extending generally horizontally such that a bottle is selectively received on the top surface 18 in its proper orientation for use. It should be appreciated that the vertically-extending support member 200 is simply a wall, but a pole would be suitable as well.

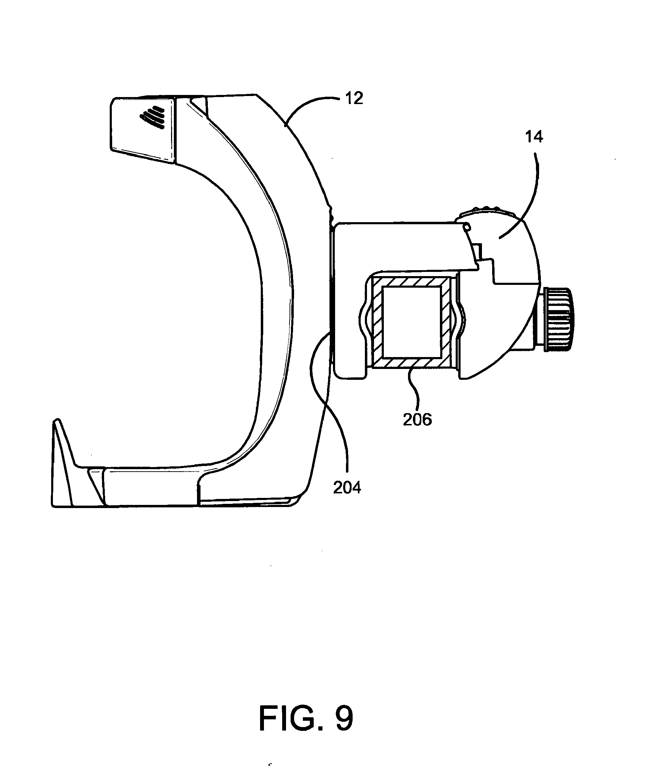

In Fig. 9, the clamp mount 80 is similarly presented in a vertical surface 204, but the clamp 14 is mounted to a horizontally-extending support member 206, and the open mouth 110 of the clamp 14 extends downwardly as opposed to horizontally, as in Fig. 8. The rear mount 50 selectively mates with the clamp mount 80 to present the bottle holder 12 in the rear-mounted orientation, with the top surface 18 of the 16 bottom wall extending generally horizontally such that a bottle is selectively received on the top surface 18 in its proper orientation for use. Notably, with respect to the clamp 14, the bottle holder 12 in Fig. 8 is rotated 90 degrees as compared to the bottle holder 12 in Fig. 9. Thus, the bottle mounting system is very versatile with respect to how it might be configured to effect a mounting of a bottle in a desired location.

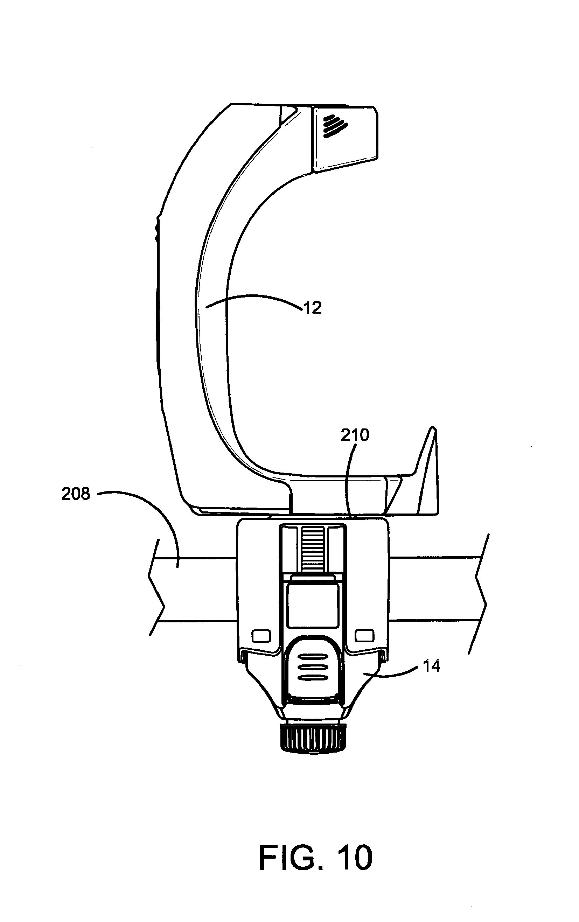

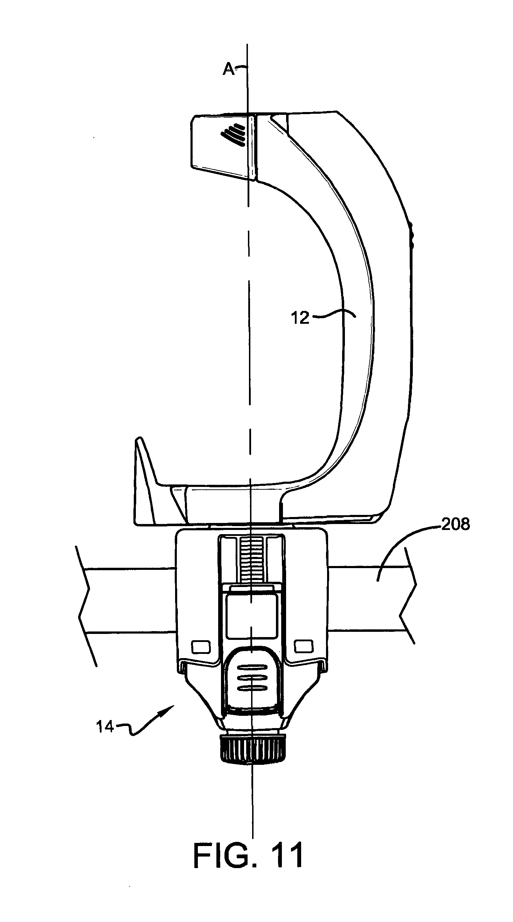

Further versatility is illustrated in Figs. 10 and 11. In Fig. 10, the clamp 14 is mounted to a horizontally-extending support member 208, such that the clamp mount 80 is presented in a horizontal surface 210 of the first jaw 60, and the bottom mount 50 selectively mates with the clamp mount 80 to present the bottle holder 12 in the rear-mounted orientation, with the top surface 18 of the bottom wall 16 extending generally horizontally such that a bottle is selectively received on the top surface 18 in its proper orientation for use. In Fig. 11, the bottle holder 12 is also mounted to a clamp 14 mounted as in Fig. 10, but the bottle holder 12 is rotated 180 degrees relative to the clamp 14, about the vertical axis represented at "A". Notably, because the flange 84 has a square perimeter, it would be possible to mount the bottle holder 12 at four different positions rotated 90 degree about the vertical axis A.

Thus, the clamp mount 80 is selectively received in the rear mount 50 in multiple orientations so as to allow the bottle holder 12 to be mounted to the clamp mount 80 in the rear-mounted orientation in various positions rotationally offset one from the other. And, similarly, the clamp mount 80 is selectively received in the bottom mount 52 in multiple orientations so as to allow the bottle holder 12 to be mounted to the clamp mount 80 in the bottom-mounted orientation in various positions rotationally offset one from the other. With the particular system employed in the embodiment shown herein, having mating male and female mount members it is possible to mount the bottle holder in a significant number of orientations simply by rotating the bottle holder 12 relative to the clamp mount 80.

More particularly, the flange 84 of the clamp mount 80 has a periphery with outermost edges that define a regular polygon having an even number of sides (in this case, a square). Either of the opposed sides of this polygon (square) can be received in the tracks 51 or 53 such that a first set of two opposed sides of the regular polygon are selectively received in either tracks 51 or 53 in a first orientation or a second orientation offset 180 degrees from the first orientation, and a second set of two opposed sides of the regular polygon are selectively received in either tracks 51 or 53 in a third orientation or a fourth orientation offset 180 degrees from the third orientation. The bottle holder 12 can be mounted in different orientations offset at 90 degree increments. It should be appreciated that this concept can be applied to male mount flanges having peripheries that define regular polygons with a greater number of sides, though preferably even in number so that the various opposed sides of the polygon are all the same length apart and therefore able to be received in the tracks provided by the female mount. In the case of a male mount flange having a periphery that defines a 6-sided regular polygon (i.e. a hexagon), the bottle holder 12 can be mounted in different orientations offset at 60 degrees increment, and, with a male mount flange defining a 8-sided regular polygon (i.e., an octagon), the bottle holder 12 can be mounted in different orientations offset at 45 degree increments.

It should be noted that though the male mount is shown on the clamp 14 (in the form of a post and flange) and the female mount is shown in the bottle holder 12 (in the form of opposed tracks), these positions could be switched. That is, the bottle holder 12 could provide male mounts at the rear and bottom, and the clamp could provide a female mount to selectively receive on of the male mounts at the rear or bottom of the bottle holder.

When the bottle holder 12 is mounted to the clamp mount 80 at the rear mount 50, the clamp mount 80 slides over the sloped surface 130 of the releasable rear latch 54 and then is held in place in the rear mount 50 by the stop surface 132 of the releasable rear latch 54. The releasable rear latch 54 readily moves due to its living hinge 134, moving out of the path of the clamp mount 80 as the bottle holder 12 is mounted, and then moving into the path to prevent removal of the bottle holder 12 once it is slid fully into position. When mounted at the rear mount 50, the releasable rear latch 54 is pressed to force the stop surface 132 out of the path of removal of the clamp mount 80, and the bottle holder 12 can be dismounted from the clamp 14. Similarly, when the bottle holder 12 is mounted to the clamp mount 80 at the bottom mount 52, the clamp mount 80 slides over the sloped surface 136 of the releasable bottom latch 56 and then is held in place in the bottom mount 52 by the stop surface 138 of the releasable bottom latch 56. The releasable bottom latch 56 readily moves due to its living hinge 140, moving out of the path of the clamp mount 80 as the bottle holder 12 is mounted, and then moving into the path to prevent removal of the bottle holder 12 once it is slid fully into position. When mounted at the bottom mount 52, the releasable bottom latch 56 is pressed to force the stop surface 138 out of the path of removal of the clamp mount 80, and the bottle holder 12 can be dismounted from the clamp 14.

With the bottle mounting system of the present invention, it will be possible to place multiple clamps 14 at various locations in a facility, and one or more bottle holders 12, with associated bottles holding a desired product, can be carried around by staff at the facility to be mounted to a given clamp 14 as needed. For example, in a hospital, clamps 14 could be mounted in every patient's room and on IV stands and in bathrooms and surgery rooms and hallways (virtually anywhere), and the hospital staff can carry around their own bottle holder with associated bottle of hand sanitizer, and mount the bottle of hand sanitizer at a given room, bathroom, hallway, etc., as needed. In this way, a bottle of desired product, in this case sanitizer, can be readily available to a given staff member, and it is not necessary to permanently mount bottles or dispensers at a multitude of locations. The clamps, being relatively inexpensive, especially as compared to permanently mounted bottles and dispensers, can be mounted to a great number of support members, and a lesser number of bottle holders and associated bottles can be carried around to be mounted and used as desired.

In light of the foregoing, it should be appreciated that the present invention significantly advances the art by providing a bottle mounting system that is structurally and functionally improved in a number of ways. The bottle mounting system may be found to be particularly useful for presenting bottles of hand hygiene product at selected areas to promote the use thereof, and patient care and food industries may specifically benefit from the use of the bottle mounting system. Indeed, the pole-mount capabilities of the bottle mounting system may be found particularly useful for mounting a bottle of product at a patient's IV stand. However, the present invention is not limited to any particular product or any particular environment.

## Claims

1. A bottle mounting system (10) comprising:
(a) a bottle holder (12) including:
a bottom wall (16) having a top surface (18) and a bottom surface (20),
a sidewall (24) having an front surface (26) and a rear surface (28), and
a rear mount (50) provided at said rear surface (28) of said sidewall (24); and
(b) a clamp (14) including:
a first jaw (60) providing a first clamp surface (64) and a clamp mount (80), and said rear mount (50) and said clamp mount (80) selectively mating to mount said bottle holder (12) to said first jaw (60) in a rear-mounted orientation, and
a second jaw (62) providing a second clamp surface (66), said second jaw (62) mating with said first jaw (60), said first jaw (60) sliding relative to said second jaw (62), said first and second jaws (60, 62) interacting to mount said clamp (14) to a support member (200, 206, 208) by squeezing the support member (200, 206, 208) between said first and second clamp surfaces (64, 66), said first clamp surface (64) moving with said first jaw (60) and said second clamp surface (66) moving with said second jaw (62),
**characterized in that** said bottle holder (12) further includes a bottom mount (52) provided at said bottom surface (20) of said bottom wall (16), said bottom mount (52) and said clamp mount (80) selectively mating to mount said bottle holder (12) to said first jaw (60) in a bottom-mounted orientation.

2. The bottle mounting system (10) of claim 1, wherein, when said first and second jaws (60, 62) are mounted to the support member (200, 206, 208) such that said clamp mount (80) is presented in a vertical surface of said first jaw (60), said rear mount (50) selectively mates with said clamp mount (80) to present said bottle holder (12) in the rear-mounted orientation, with said top surface (18) of said bottom wall (16) extending generally horizontally such that a bottle (B) is selectively received on said top surface (18) in its proper orientation for use.

3. The bottle mounting system (10) of claim 2, wherein, when said first and second jaws are (60, 62) mounted to the support member (200, 206, 208) such that said clamp mount (80) is presented in a horizontal surface of said first jaw (60), said bottom mount (52) selectively mates with said clamp mount (80) to present said bottle holder (12) in the bottom-mounted orientation, with said top surface (18) of said bottom wall (16) extending generally horizontally such that a bottle (B) is selectively received on said top surface (18) in its proper orientation for use.

4. The bottle mounting system (10) of claim 3, wherein said bottom mount (52) and said clamp mount (80) selectively mate to mount said bottle holder (12) to said first jaw (60) in a bottom-mounted orientation, and said bottom mount (52) and clamp mount (80) are configured so that said bottle holder (12) can be mounted to said clamp mount (80) in different orientations rotated about a vertical axis of said bottle holder (12), and said rear mount (50) and said clamp mount (80) selectively mate to mount said bottle holder (12) to said first jaw (60) in a rear-mounted orientation, and said rear mount (50) and clamp mount (80) are configured so that said bottle holder (12) can be mounted to said clamp mount (80) in different orientations rotated about a horizontal axis of said bottle holder (12).

5. The bottle mounting system (10) of claim 3, wherein said bottom mount (52) is selected from a male mount and a female mount, said rear mount (50) is selected from a male mount and a female mount, with the proviso that said rear mount (50) and said bottom mount (52) are selected to be the same, and said clamp mount (80) is selected from a male mount and a female mount, with the proviso that if said bottom and rear mounts (52, 50) are selected to be male mounts, said clamp mount (80) is selected to be a female mount, and, if said bottom mount (52) and said rear mount (50) are selected to be female mounts, said clamp mount (80) is selected to be a male mount.

6. The bottle mounting system (10) of claim 5, wherein said clamp mount (80) is a male mount that includes a post (82) and a flange (84) extending therefrom, said rear mount (50) being a female mount including a track (51) such that said rear mount (50) selectively receives said flange (84) to mount said bottle (B) in the rear-mounted orientation, and said bottom mount (52), due to the proviso that it be the same as said rear mount (50), is a female mount including a track (53) such that said bottom mount (52) selectively receives said flange (84) to mount said bottle (B) in the bottom-mounted orientation.

7. The bottle mounting system (10) of claim 6, wherein said clamp mount (80) is selectively received in said track (51) of said rear mount (50) in multiple orientations so as to allow said bottle holder (12) to be mounted to said clamp mount (80) at said rear mount (50) in multiple orientations.

8. The bottle mounting system (10) of claim 7, wherein said flange (84) of said clamp mount (80) has a periphery with outermost edges that define a regular polygon having an even number of sides, such that a first set of two opposed sides of said regular polygon are selectively received in said track (51) of said rear mount (50) to selectively mount said bottle holder (12) to said clamp mount (80) in a first orientation or a second orientation offset 180 degrees from said first orientation, and a second set of two opposed sides of said regular polygon are selectively received in said track (51) of said rear mount (50) to selectively mount said bottle holder (12) to said clamp mount in a third orientation or a fourth orientation offset 180 degrees from said third orientation.

9. The bottle mounting system (10) of claim 8, wherein said flange (84) of said clamp mount (80) has a periphery with outermost edges that defme a square, such that a first set of two opposed sides of said square are selectively received in said track (51) of said rear mount (50) to mount said bottle holder (12) in either said first or second orientation, and a second set of two opposed sides of said square are selectively received in said track (51) of said rear mount (50) to mount said bottle holder (12) in either said third or fourth orientation.

10. The bottle mounting system (10) of claim 7, wherein said clamp mount (80) is selectively received in said track (53) of said bottom mount (52) in multiple orientations so as to allow said bottle holder (12) to be mounted to said clamp mount (80) at said bottom mount (52) in multiple orientations.

11. The bottle mounting system (10) of claim 6, wherein said bottom mount (52) includes a releasable bottom latch (56) that engages said clamp mount (80) in said bottom-mounted position, and said rear mount (50) includes a releasable rear latch (54) that engages said clamp mount (80) in said rear-mounted position.

12. The bottle mounting system (10) of claim 1, wherein the clamp (14) includes a releasable locking member (90) that has a locking position wherein it locks said first jaw (60) and second jaw (62) in relative position to each other so as to prevent said first jaw (60) and second jaw (62) from moving apart from each other, and a non-locking position wherein it permits said first jaw (60) and second jaw (62) to move apart from each other.

13. The bottle mounting system (10) of claim 12, wherein said releasable locking member (90) includes:
a pawl (92) held by one of said first jaw (60) and said second jaw (62), and
a ratchet rack (98) held by the other of said first jaw (60) and said second jaw (62), said ratchet rack (98) providing teeth (96), said pawl (92) being biased to engage said teeth (96) of said ratchet rack (98) in an engaged position, wherein, in said engaged position, said pawl (92) ratchets over said teeth (96) as said first clamp surface (64) is toward said second clamp surface (66), and, in said engaged position, said pawl (92) prevents movement of said first clamp surface (64) away from said second clamp surface (66).

14. The bottle mounting system (10) of claim 13, wherein said releasable locking member (90) further includes:
a switch (100) engaging said pawl (92) and selectively manipulated to move said pawl (92) from said engaged position to a disengaged position wherein said pawl (92) does not engage said teeth (96) of said ratchet rack (98) and said first clamp surface (64) is not prevented from moving away from said second clamp surface (66).

15. The bottle mounting system (10) of claim 1, wherein said first clamp surface (64) is mounted to a threaded screw (122) extending through a threaded bore (124) in said first jaw (60), said threaded screw (122) being selectively rotated to micro-adjust the positioning of said first clamp surface (64) relative to said second clamp surface (66).

16. The bottle mounting system (10) of claim 1, wherein said bottom mount (52) and said rear mount (50) are joined to provide a continuous mount such that said clamp mount (80) is selectively moved between said bottom-mounted orientation and said rear-mounted orientation without disengaging said clamp mount (80) and said continuous mount.

## Patentansprüche

1. Flaschenbefestigungssystem (10), umfassend:
(a) einen Flaschenhalter (12), umfassend:
eine Bodenwand (16) mit einer Oberseite (18) und einer Unterseite (20);
eine Seitenwand (24) mit einer Vorderseite (26) und einer Rückseite (28);
eine Rückseitenhalterung (50), die an der Rückseite (28) der Seitenwand (24) vorgesehen ist; und
(b) eine Klemme (14), umfassend:
eine erste Backe (60), die eine erste Klemmfläche (64) und eine Klemmenhalterung (80) bereitstellt, und wobei die Rückseitenhalterung (50) und die Klemmenhalterung (80) selektiv so zusammenpassen, dass der Flaschenhalter (12) in einer rückseitigen Befestigungsausrichtung an der ersten Backe (60) befestigt wird, und
eine zweite Backe (62), die eine zweite Klemmfläche (66) bereitstellt, wobei die zweite Backe (62) mit der ersten Backe (60) zusammenpasst, die erste Backe (60) in Bezug auf die zweite Backe (62) verschiebbar ist, die ersten und zweiten Backen (60, 62) zusammenwirken, um die Klemme (14) durch Einklemmen eines Tragelements (200, 206, 208) zwischen den ersten und zweiten Klemmflächen (64, 66) am Tragelement (200, 206, 208) zu befestigen, die erste Klemmfläche (64) sich mit der ersten Backe (60) bewegt, und die zweite Klemmfläche (66) sich mit der zweiten Backe (62) bewegt,
**dadurch gekennzeichnet, dass** der Flaschenhalter (12) ferner eine Bodenhalterung (52) umfasst, die an der Unterseite (20) der Bodenwand (16) vorgesehen ist, wobei die Bodenhalterung (52) und die Klemmenhalterung (80) selektiv so zusammenpassen, dass der Flaschenhalter (12) in einer bodenseitigen Befestigungsausrichtung an der ersten Backe (60) befestigt wird.

2. Flaschenbefestigungssystem (10) nach Anspruch 1, wobei, wenn die ersten und zweiten Backen (60, 62) derart am Tragelement (200, 206, 208) befestigt sind, dass die Klemmenhalterung (80) in einer vertikalen Fläche der ersten Backe (60) dargeboten wird, die Rückseitenhalterung (50) selektiv so mit der Klemmenhalterung (80) zusammenpasst, dass der Flaschenhalter (12) in der rückseitigen Befestigungsausrichtung dargeboten wird, wobei sich die Oberseite (18) der Bodenwand (16) im Allgemeinen horizontal erstreckt, derart dass eine Flasche (B) auf der Oberseite (18) in ihrer gebrauchsgerechten Ausrichtung selektiv aufgenommen wird.

3. Flaschenbefestigungssystem (10) nach Anspruch 2, wobei, wenn die ersten und zweiten Backen (60, 62) derart am Tragelement (200, 206, 208) befestigt sind, dass die Klemmenhalterung (80) in einer horizontalen Fläche der ersten Backe (60) dargeboten wird, die Bodenhalterung (52) selektiv so mit der Klemmenhalterung (80) zusammenpasst, dass der Flaschenhalter (12) in der bodenseitigen Befestigungsausrichtung dargeboten wird, wobei sich die Oberseite (18) der Bodenwand (16) im Allgemeinen horizontal erstreckt, derart dass eine Flasche (B) auf der Oberseite (18) in ihrer gebrauchsgerechten Ausrichtung selektiv aufgenommen wird.

4. Flaschenbefestigungssystem (10) nach Anspruch 3, wobei die Bodenhalterung (52) und die Klemmenhalterung (80) selektiv so zusammenpassen, dass der Flaschenhalter (12) in einer bodenseitigen Befestigungsausrichtung an der ersten Klemme (60) befestigt ist, und die Bodenhalterung (52) und die Klemmenhalterung (80) so ausgelegt sind, dass der Flaschenhalter (12) in verschiedenen Ausrichtungen um eine vertikale Achse des Flaschenhalters (12) gedreht an der Klemmenhalterung (80) befestigt werden kann, und die Rückseitenhalterung (50) und die Klemmenhalterung (80) selektiv so zusammenpassen, dass der Flaschenhalter (12) in einer rückseitigen Befestigungsausrichtung an der ersten Klemme (60) befestigt ist, und die Rückseitenhalterung (50) und die Klemmenhalterung (80) so ausgelegt sind, dass der Flaschenhalter (12) in verschiedenen Ausrichtungen um eine horizontale Achse des Flaschenhalters (12) gedreht an der Klemmenhalterung (80) befestigt werden kann.

5. Flaschenbefestigungssystem (10) nach Anspruch 3, wobei die Bodenhalterung (52) aus einer Steckhalterung und einer Aufnahmehalterung ausgewählt ist, die Rückseitenhalterung (50) aus einer Steckhalterung und einer Aufnahmehalterung ausgewählt ist, mit der Maßgabe, dass die Rückseitenhalterung (50) und die Bodenhalterung (52) so ausgewählt sind, dass sie gleich sind, und die Klemmenhalterung (80) aus einer Steckhalterung und einer Aufnahmehalterung ausgewählt ist, mit der Maßgabe, dass, wenn die Boden- und Rückseitenhalterungen (52, 50) so ausgewählt sind, dass sie Steckhalterungen sind, die Klemmenhalterung (80) so ausgewählt ist, dass sie eine Aufnahmehalterung ist, und, wenn die Bodenhalterung (52) und die Rückseitenhalterung (50) so ausgewählt sind, dass sie Aufnahmehalterungen sind, die Klemmenhalterung (80) so ausgewählt ist, dass sie eine Steckhalterung ist.

6. Flaschenbefestigungssystem (10) nach Anspruch 5, wobei die Klemmenhalterung (80) eine Steckhalterung ist, die eine Stange (82) und einen sich davon erstreckenden Flansch (84) umfasst, die Rückseitenhalterung (50) eine Aufnahmehalterung ist, die eine Schiene (51) umfasst, derart dass die Rückseitenhalterung (50) den Flansch (84) selektiv aufnimmt, um die Flasche (B) in der rückseitigen Befestigungsausrichtung zu befestigen, und die Bodenhalterung (52) infolge der Maßgabe, dass sie gleich wie die Rückseitenhalterung (50) ist, eine Aufnahmehalterung ist, die eine Schiene (53) umfasst, derart dass die Bodenhalterung (52) den Flansch (84) selektiv aufnimmt, um die Flasche (B) in der bodenseitigen Befestigungsausrichtung zu befestigen.

7. Flaschenbefestigungssystem (10) nach Anspruch 6, wobei die Klemmenhalterung (80) in mehreren Ausrichtungen selektiv in der Schiene (51) der Rückseitenhalterung (50) aufgenommen wird, um es zu ermöglichen, dass der Flaschenhalter (12) an der Rückseitenhalterung (50) in mehreren Ausrichtungen an der Klemmenhalterung (80) befestigt wird.

8. Flaschenbefestigungssystem (10) nach Anspruch 7, wobei der Flansch (84) der Klemmenhalterung (80) einen Rand mit äußersten Kanten aufweist, die ein regelmäßiges Vieleck mit einer geraden Anzahl von Seiten definieren, derart dass ein erster Satz von zwei gegenüberliegenden Seiten des regelmäßigen Vielecks selektiv in der Schiene (51) der Rückseitenhalterung (50) aufgenommen wird, um den Flaschenhalter (12) selektiv in einer ersten Ausrichtung oder einer zweiten, von der ersten Ausrichtung um 180 Grad versetzten Ausrichtung an der Klemmenhalterung (80) zu befestigen, und ein zweiter Satz von zwei gegenüberliegenden Seiten des regelmäßigen Vielecks selektiv in der Schiene (51) der Rückseitenhalterung (50) aufgenommen wird, um den Flaschenhalter (12) selektiv in einer dritten Ausrichtung oder einer vierten, von der dritten Ausrichtung um 180 Grad versetzten Ausrichtung an der Klemmenhalterung zu befestigen.

9. Flaschenbefestigungssystem (10) nach Anspruch 8, wobei der Flansch (84) der Klemmenhalterung (80) einen Rand mit äußersten Kanten aufweist, die ein Quadrat definieren, derart dass ein erster Satz von zwei gegenüberliegenden Seiten des Quadrats selektiv in der Schiene (51) der Rückseitenhalterung (50) aufgenommen wird, um den Flaschenhalter (12) entweder in der ersten oder zweiten Ausrichtung zu befestigen, und ein zweiter Satz von zwei gegenüberliegenden Seiten des Quadrats selektiv in der Schiene (51) der Rückseitenhalterung (50) aufgenommen wird, um den Flaschenhalter (12) entweder in der dritten oder vierten Ausrichtung zu befestigen.

10. Flaschenbefestigungssystem (10) nach Anspruch 7, wobei die Klemmenhalterung (80) in mehreren Ausrichtungen selektiv in der Schiene (53) der Bodenhalterung (52) aufgenommen wird, um es zu ermöglichen, dass der Flaschenhalter (12) an der Bodenhalterung (52) in mehreren Ausrichtungen an der Klemmenhalterung (80) befestigt wird.

11. Flaschenbefestigungssystem (10) nach Anspruch 6, wobei die Bodenhalterung (52) einen lösbaren Bodenriegel (56) umfasst, der in der bodenseitigen Befestigungsausrichtung in die Klemmenhalterung (80) eingreift, und die Rückseitenhalterung (50) einen lösbaren Rückseitenriegel (54) umfasst, der in der rückseitigen Befestigungsausrichtung in die Klemmenhalterung (80) eingreift.

12. Flaschenbefestigungssystem (10) nach Anspruch 1, wobei die Klemme (14) ein lösbares Verriegelungselement (90) umfasst, das eine Verriegelungsposition, in welcher sie die erste Backe (60) und die zweite Backe (62) in relativer Position zueinander verriegelt, um zu verhindern, dass die erste Backe (60) und die zweite Backe (62) sich voneinander weg bewegen, und eine nicht verriegelnde Position aufweist, in welcher sie es ermöglicht, dass die erste Backe (60) und die zweite Backe (62) sich voneinander weg bewegen.

13. Flaschenbefestigungssystem (10) nach Anspruch 12, wobei das lösbare Verriegelungselement (90) umfasst:
eine Sperrklinke (92), die durch eine von der ersten Backe (60) und der zweiten Backe (62) gehalten wird, und
eine Rastzahnstange (98), die durch die andere von der ersten Backe (60) und der zweiten Backe (62) gehalten wird, wobei die Rastzahnstange (98) Zähne (96) bereitstellt, die Sperrklinke (92) vorgespannt ist, um in einer Einrastposition in die Zähne (96) der Rastzahnstange (98) einzurasten, wobei die Sperrklinke (92) in der Einrastposition die Zähne (96) überspringt, wenn die erste Klemmfläche (64) zur zweiten Klemmfläche (66) ist, und die Rastklinke (92) in der Einrastposition Bewegung der ersten Klemmfläche (64) von der zweiten Klemmfläche (66) weg verhindert.

14. Flaschenbefestigungssystem (10) nach Anspruch 13, wobei das lösbare Verriegelungselement (90) ferner umfasst:
ein Betätigungsglied (100), das in die Sperrklinke (92) eingreift und selektiv betätigt wird, um die Sperrklinke (92) aus der Einrastposition in eine Ausrastposition zu bewegen, in welcher die Sperrklinke (92) nicht in die Zähne (96) der Rastzahnstange (98) einrastet und die erste Klemmfläche (64) nicht daran gehindert wird, sich von der zweiten Klemmfläche (66) weg zu bewegen.

15. Flaschenbefestigungssystem (10) nach Anspruch 1, wobei die erste Klemmfläche (64) an einer Gewindeschraube (122) befestigt ist, die sich durch eine Gewindebohrung (124) in der ersten Backe (60) erstreckt, wobei die Gewindeschraube (122) selektiv gedreht wird, um die Positionierung der ersten Klemmfläche (64) in Bezug auf die zweite Klemmfläche (66) in Mikroeinstellung anzupassen.

16. Flaschenbefestigungssystem (10) nach Anspruch 1, wobei die Bodenhalterung (52) und die Rückseitenhalterung (50) verbunden sind, um eine durchgehende Halterung bereitzustellen, derart dass die Klemmenhalterung (80) selektiv zwischen der bodenseitigen Befestigungsausrichtung und der rückseitigen Befestigungsausrichtung bewegt werden kann, ohne die Klemmenhalterung (80) und die durchgehende Halterung zu trennen.

## Revendications

1. Système de support de flacon (10), comprenant :
(a) un porte-flacon (12) comprenant :
une paroi inférieure (16) ayant une surface supérieure (18) et une surface inférieure (20),
une paroi latérale (24) comportant une surface avant (26) et une surface arrière (28),
et
un support arrière (50) prévu au niveau de ladite surface arrière (28) de ladite paroi latérale (24) ; et
(b) un élément de fixation (14) comprenant :
une première mâchoire (60) fournissant une première surface de serrage (64) et un support d'élément de fixation (80), et ledit support arrière (50) et ledit support d'élément de fixation (80) accouplés de manière sélective pour monter ledit porte-flacon (12) à ladite première mâchoire (60) dans une orientation à l'arrière, et
une seconde mâchoire (62) fournissant une seconde surface de serrage (66), ladite seconde mâchoire (62) s'accouplant avec ladite première mâchoire (60), ladite première mâchoire (60) coulissant par rapport à ladite seconde mâchoire (62), lesdites première et seconde mâchoires (60, 62) coopérant pour monter ledit élément de fixation (14) à un élément de support (200, 206, 208) en serrant l'élément de support (200, 206, 208) entre lesdites première et seconde surfaces de serrage (64, 66), ladite première surface de serrage (64) se déplaçant avec ladite première mâchoire (60) et ladite seconde surface de serrage (66) se déplaçant avec ladite seconde mâchoire (62),
**caractérisé en ce que** ledit porte-flacon (12) comprend en outre un support de fond (52) prévu au niveau de ladite surface inférieure (20) de ladite paroi inférieure (16), ledit support de fond (52) et ledit support d'élément de fixation (80) accouplés de manière sélective pour monter ledit porte-flacon (12) à ladite première mâchoire (60) dans une orientation vers le fond.

2. Système de support de flacon (10) selon la revendication 1, dans lequel, lorsque lesdites première et seconde mâchoires (60, 62) sont montées sur l'élément de support (200, 206, 208) de sorte que ledit support d'élément de fixation (80) est présenté dans une surface verticale de ladite première mâchoire (60), ledit support arrière (50) s'accouple sélectivement avec ledit support d'élément de fixation (80) pour présenter ledit porte-flacon (12) dans une orientation de support arrière, par rapport à ladite surface supérieure (18) de ladite paroi inférieure (16) s'étendant de façon générale horizontalement de telle sorte qu'une bouteille (B) est reçue de manière sélective sur ladite surface supérieure (18) dans son orientation adéquate pour l'utilisation.

3. Système de support de flacon (10) selon la revendication 2, dans lequel, lorsque lesdites première et seconde mâchoires (60, 62) sont montées sur l'élément de support (200, 206, 208) de sorte que ledit support d'élément de fixation (80) est présenté dans une surface horizontale de ladite première mâchoire (60), ledit support de fond (52) s'accouple sélectivement avec ledit support d'élément de fixation (80) pour présenter ledit porte-flacon (12) dans une orientation de support vers le fond, avec ladite surface supérieure (18) de ladite paroi inférieure (16) s'étendant de façon générale horizontalement de telle sorte qu'une bouteille (B) est reçue de manière sélective sur ladite surface supérieure (18) dans son orientation adéquate pour l'utilisation.

4. Système de support de flacon (10) selon la revendication 3, dans lequel ledit support de fond (52) et ledit support d'élément de fixation (80) s'accouplent de manière sélective pour monter ledit porte-flacon (12) à ladite première mâchoire (60) dans une orientation de support vers le fond, et ledit support de fond (52) et ledit support d'élément de fixation (80) sont configurés de telle sorte que ledit porte-flacon (12) puisse être monté sur ledit support d'élément de fixation (80) dans différentes orientations en rotation autour d'un axe vertical dudit porte-flacon (12), et ledit support arrière (50) et ledit support d'élément de fixation (80) s'accouplent de manière sélective pour monter ledit porte-flacon (12) à ladite première mâchoire (60) dans une orientation de support arrière, et ledit support arrière (50) et ledit support d'élément de fixation (80) sont configurés de telle sorte que ledit porte-flacon (12) puisse être monté sur ledit support d'élément de fixation (80) dans différentes orientations en rotation autour d'un axe horizontal dudit porte-flacon (12).

5. Système de support de flacon (10) selon la revendication 3, dans lequel ledit support de fond (52) est sélectionné à partir d'un montage mâle et d'un montage femelle, ledit support arrière (50) est sélectionné à partir d'un montage mâle et d'un montage femelle, à la condition que ledit support arrière (50) et ledit support de fond (52) soient choisis pour être les mêmes, et ledit support d'élément de fixation (80) est sélectionné à partir d'un montage mâle et d'un montage femelle, à la condition que si lesdits support de fond et support arrière (52, 50) sont sélectionnés pour être des montages mâles, ledit support d'élément de fixation (80) est sélectionné pour être un montage femelle, et, si ledit support de fond (52) et ledit support arrière (50) sont sélectionnés pour être des montages femelles, ledit support d'élément de fixation (80) est choisi pour être un montage mâle.

6. Système de support de flacon (10) selon la revendication 5, dans lequel ledit support d'élément de fixation (80) est un montage mâle qui comporte une tige (82) et une bride (84) s'étendant à partir de celui-ci, ledit support arrière (50) étant un montage femelle comprenant une piste (51) de sorte que ledit support arrière (50) reçoit sélectivement ladite bride (84) pour monter ladite bouteille (B) dans une orientation de support arrière, et ledit support de fond (52), en raison de la condition que ce soit le même que ledit support arrière (50), est un montage femelle comportant une piste (53) de sorte que ledit support de fond (52) reçoit sélectivement ladite bride (84) pour monter ladite bouteille (B) dans l'orientation vers le fond.

7. Système de support de flacon (10) selon la revendication 6, dans lequel ledit support d'élément de fixation (80) est sélectivement reçu dans ladite piste (51) dudit support arrière (50) dans de multiples orientations afin de permettre audit porte-flacon (12) d'être monté audit support d'élément de fixation (80) audit support arrière (50) dans de multiples orientations.

8. Système de support de flacon (10) selon la revendication 7, dans lequel ladite bride (84) dudit support d'élément de fixation (80) présente une périphérie avec des bords extérieurs qui définissent un polygone régulier ayant un nombre pair de côtés, de sorte qu'un premier jeu de deux côtés opposés dudit polygone régulier est sélectivement reçu dans ladite piste (51) dudit support arrière (50) pour monter de manière sélective ledit porte-flacon (12) dudit support d'élément de fixation (80) dans une première orientation ou une deuxième orientation décalée de 180 degrés à partir de ladite première orientation, et un second jeu de deux côtés opposés dudit polygone régulier est sélectivement reçu dans ladite piste (51) dudit support arrière (50) pour monter de manière sélective ledit porte-flacon (12) dudit support d'élément de fixation dans une troisième orientation ou un quatrième orientation décalée de 180 degrés à partir de ladite troisième orientation.

9. Système de support de flacon (10) selon la revendication 8, dans lequel ladite bride (84) dudit support d'élément de fixation (80) présente une périphérie avec des bords extérieurs qui définissent un carré, de sorte qu'un premier jeu de deux côtés opposés dudit carré sont sélectivement reçus dans ladite piste (51) dudit support arrière (50) pour monter ledit porte-flacon (12) soit dans ladite première ou seconde orientation, et un second jeu de deux côtés opposés dudit carré sont sélectivement reçus dans ladite piste (51) dudit support arrière (50) pour monter ledit porte-flacon (12) soit dans ladite troisième ou quatrième orientation.

10. Système de support de flacon (10) selon la revendication 7, dans lequel ledit support d'élément de fixation (80) est sélectivement reçu dans ladite piste (53) dudit support de fond (52) dans de multiples orientations afin de permettre audit porte-flacon (12) d'être monté audit support d'élément de fixation (80) audit support de fond (52) dans de multiples orientations.

11. Système de support de flacon (10) selon la revendication 6, dans lequel ledit support de fond (52) comprend un verrou de fond amovible (56) qui vient en prise avec ledit support d'élément de fixation (80) dans ladite position vers le fond, et ledit support arrière (50) comprend un verrou arrière amovible (54) qui vient en prise avec le support d'élément de fixation (80) dans ladite position à l'arrière.

12. Système de support de flacon (10) selon la revendication 1, dans lequel l'élément de fixation (14) comprend un élément de verrouillage libérable (90) qui a une position de verrouillage dans laquelle il verrouille ladite première mâchoire (60) et ladite seconde mâchoire (62) en position relative l'une par rapport à l'autre de façon à empêcher ladite première mâchoire (60) et ladite seconde mâchoire (62) de se déplacer indépendamment l'une de l'autre, et une position de non-verrouillage dans laquelle il permet à ladite première mâchoire (60) et à ladite seconde mâchoire (62) de s'écarter l'une de l'autre.

13. Système de support de flacon (10) selon la revendication 12, dans lequel ledit élément de verrouillage libérable (90) comprend :
un cliquet (92) maintenu par l'une parmi ladite première mâchoire (60) et ladite seconde mâchoire (62), et une crémaillère à cliquet (98) maintenue par l'autre parmi ladite première mâchoire (60) et ladite seconde mâchoire (62), ladite crémaillère à cliquet (98) fournissant des dents (96), ledit cliquet (92) étant incliné pour être en prise avec lesdites dents (96) de ladite crémaillère à cliquet (98) dans une position engagée, où, dans ladite position engagée, ledit cliquet (92) s'encliquette sur lesdites dents (96) car ladite première surface de serrage (64) est orientée vers ladite seconde surface de serrage (66), et, dans ladite position engagée, ledit cliquet (92) empêche le mouvement de ladite première surface de serrage (64) en s'éloignant de ladite seconde surface de serrage (66).

14. Système de support de flacon (10) selon la revendication 13, dans lequel ledit élément de verrouillage libérable (90) comprend en outre :
un commutateur (100) en prise avec ledit cliquet (92) et manoeuvré de façon sélective pour déplacer ledit cliquet (92) à partir de ladite position engagée à une position dégagée dans laquelle ledit cliquet (92) n'engage pas lesdites dents (96) de ladite crémaillère à cliquet (98) et ladite première surface de serrage (64) n'est pas empêchée de se déplacer en s'éloignant de ladite seconde surface de serrage (66).

15. Système de support de flacon (10) selon la revendication 1, dans lequel ladite première surface de serrage (64) est montée sur une vis filetée (122) s'étendant à travers un alésage fileté (124) dans ladite première mâchoire (60), ladite vis filetée (122) étant mise en rotation de manière sélective pour micro-ajuster la position de ladite première surface de serrage (64) par rapport à ladite deuxième surface de serrage (66).

16. Système de support de flacon (10) selon la revendication 1, dans lequel ledit support de fond (52) et ledit support arrière (50) sont assemblés pour fournir un support continu de sorte que ledit support d'élément de fixation (80) est déplacé sélectivement entre ladite orientation montée sur le fond et ladite orientation montée à l'arrière sans désengager ledit support d'élément de fixation (80) et ledit support continu.
